# EUROPEAN PATENT SPECIFICATION

(11) **EP 3 554 695 B1**
(45) Date of publication and mention of the grant of the patent: **11.03.2020**
(21) Application number: 18704622.2
(22) Date of filing: 31.01.2018
(51) Int. Cl.: B01J 35/00, B01J 37/02, B01J 37/03, B01J 37/16, B01J 37/34, B01J 27/04, B01J 27/051, B01J 19/12

(54) **SEMICONDUCTOR/M1/CDXM1-XS BASED PHOTOCATALYST FOR EFFICIENT HYDROGEN GENERATION**
PHOTOKATALYSATOR AUF BASIS VON HALBLEITER/M1/CDXM1-XS ZUR EFFIZIENTEN WASSERSTOFFERZEUGUNG
PHOTOCATALYSEUR À BASE DE SEMICONDUCTEUR/M1/CDXM1-XS POUR LA PRODUCTION EFFICACE D'HYDROGÈNE

(30) Priority: 31.01.2017 US 201762452612 P; 31.01.2017 US 201762452623 P
(43) Date of publication of application: 23.10.2019
(73) Proprietor: SABIC Global Technologies B.V., 4612 PX Bergen op Zoom (NL)
(72) Inventor: ISIMJAN, Tayirjan Taylor, Thuwal 23955-6900 (SA); IDRISS, Hicham, Thuwal 23955-6900 (SA)
(74) Representative: J A Kemp LLP
(86) International application number: PCT/IB2018/050609
(87) International publication number: WO 2018/142305

(56) References cited:
- WO-A1-2013/006427
- S. R. LINGAMPALLI ET AL: "Highly efficient photocatalytic hydrogen generation by solution-processed ZnO/Pt/CdS, ZnO/Pt/Cd1-xZnxS and ZnO/Pt/CdS1-xSex hybrid nanostructures", ENERGY & ENVIRONMENTAL SCIENCE, vol. 6, no. 12, 1 January 2013 (2013-01-01), page 3589, XP055464536, Cambridge ISSN: 1754-5692, DOI: 10.1039/c3ee42623h cited in the application & S. R Lingampalli ET AL: "Highly efficient photocatalytic hydrogen generation by solution-processed ZnO/Pt/CdS, ZnO/Pt/Cd1-xZnxS and ZnO/Pt/CdS1-xSex hybrid nanostructures", Energy & Environmental Science, 1 January 2013 (2013-01-01), page 3589, XP055464533, DOI: 10.1039/c3ee42623h Retrieved from the Internet: URL:http://www.rsc.org/suppdata/ee/c3/c3ee 42623h/c3ee42623h.pdf [retrieved on 2018-04-05] cited in the application
- ROY ANAND ET AL: "Effects of morphology and surface area of the oxide nanostructures on the visible-light induced generation of hydrogen in ZnO(TiO2)/Cd1-xZnxS and ZnO(TiO2)/Pt/Cd1-xZnxS heterostructures", CHEMICAL PHYSICS LETTERS, ELSEVIER BV, NL, vol. 637, 13 August 2015 (2015-08-13), pages 137-142, XP029279120, ISSN: 0009-2614, DOI: 10.1016/J.CPLETT.2015.08.005
- ZHOU HAN ET AL: "Biomass-derived hierarchical porous CdS/M/TiO2(M = Au, Ag, pt, pd) ternary heterojunctions for photocatalytic hydrogen evolution", INTERNATIONAL JOURNAL OF HYDROGEN ENERGY, ELSEVIER SCIENCE PUBLISHERS B.V., BARKING, GB, vol. 39, no. 29, 30 August 2014 (2014-08-30), pages 16293-16301, XP029057308, ISSN: 0360-3199, DOI: 10.1016/J.IJHYDENE.2014.08.032

## Description

### A. Field of the Invention

The invention generally concerns a Z-scheme photocatalyst system that includes a metal particle that can be positioned between two semiconductor materials for use in water-splitting systems.

### B. Description of Related Art

Developing stable and clean energy sources has attracted vast amounts of research. Despite solar being the largest energy source, only less than 0.06% of its energy is utilized for global electricity generation (Zhang et al., Chemical Society Reviews 2012, 41(6):2382-94). Although, the price of photovoltaic (PV) modules has been declining by 5-7% annually in the past ten years, developing an economically viable and scalable energy storage solution is always challenging (Rodriguez et al., Energy and Environmental Science 2014, 7(12):3828-35). Photocatalytic water-splitting (which generates energy rich molecular H₂) has been investigated as a scalable, and cost effective solar to fuel generating system (Reece et al., Science 2011, 334(6056):645-48).

Photocatalytic systems generally use semiconductor materials. Most semiconductors with suitable band structures such as TiO₂ (Fujishima and Honda, Nature 1972, 238(5358):37-38), ZnO (Kudo and Miseki, Chemical Society Reviews 2009, 38(1):253-78), SrTiO₃ (Takata et al., Journal of the American Chemical Society 2015, 137(30):9627-34), *etc.* have band gaps which are only active under UV light. Therefore, other semiconductors have been investigated. By way of example, cadmium sulfide-based semiconductors such as CdₓZn₁₋ₓS have been investigated due to their band gap engineering potential, and better charge mobility as compared to CdS (Li et al., ACS Catalysis 2013, 3(5):882-89). The photocatalytic activity of various morphologies of CdₓZn₁₋ₓS have been investigated, including nanoparticles (Zhang et al., Nano Letters 2012, 12(9):4584-89; Yu et al., Angewandte Chemie - International Edition 2012, 51(4):897-900), nanotwins (Liu et al., Energy & Environmental Science 2011, 4(4):1372-78), nano-flowers (Xiong et al., Nanoscale Research Letters 2013, 8(1):1-6) and volvox-like structures (Zhou et al., Chemistry - An Asian Journal 2014, 9(3):811-18). Despite the suitable band gap and high quantum efficiency, these types of CdS based photocatalysts suffer from catalytic decay even with sacrificial reagents because the sulfide is easily oxidized to elemental sulfur by photogenerated holes. Lingampalli *et al.,* has reported that [ZnO]₄/Pt/Cd_{0.8} Zn_{0.2}S hetero-junction structures show an apparent quantum yield of 50% in the 395-515 nm region (Lingampalli et al., Energy and Environmental Science 2013, 6(12):3589-94). These results imply that the metal nano particles located between two nanocrystals accelerated the charge separation in the Z-scheme (*See,* Tada et al., Nature Materials 2006, 5(10):782-86; Yu et al., Journal of Materials Chemistry A 2013, 1(8):2773-76). However, this system is not stable over the long term for two reasons: (1) ZnO is only stable in a narrow pH range (pH 6-8) (*See,* Colloids and Surfaces A: Physicochemical and Engineering Aspects 2014, 451 (1), 7-15, The Science of the total environment 2014, 468-469, 195-201 *and* ACS Applied Materials and Interfaces 2014, 6 (1), 495-499), whereas the ideal pH for hydrogen production, either by sacrificial or direct water-splitting, is outside of that range; and (2) the original Z-scheme structure can be gradually destroyed following the dissolution of the ZnO which subsequently causes the decomposition of Cd_{0.8}Zn_{0.2}S.

For at least the reasons discussed above, there remains a need for additional photocatalyst that are more stable and efficient.

### SUMMARY

A solution that addresses at least some of the above-discussed problems associated with photocatalysts (*e.g*., holes from CdS based light absorbers) has been discovered. The solution is premised on methods and compositions that effectively remove holes from CdS based light absorbers providing photocatalysts with longer term stability. Without wishing to be bound by theory, it is believed that no single semiconductor can fulfill the requirements of (i) suitable band gap energy of 1.8-2.4 eV, which is the optimal energy band positions for total water-splitting using sun light, (ii) high quantum yield, (iii) long term stability under photocatalytic conditions, and (iv) energy band edges positions suitable for the redox reaction to occur. Therefore, integration of metal oxide or carbon nitride semiconductor material (because of their stability) with a Cd-based semiconductor material (because of their efficiency) offers a potential solution. These integrated systems can be poised to not only provide more efficient charge transfer, but also prolong the life time of the charge carriers.

The effective Z-scheme of the photocatalyst of the present invention can remove the photo-generated hole from a CdₓM₁₋ₓS (M= Zn or Ni; and *x* from 0.7 to 0.9) based catalyst, which can result in a stable hybrid system. Furthermore, the hybrid systems described herein have several advantages. First, the preparation method is simple and straightforward. Second, the oxide semiconductors are stable and the photo corrosion issue of Cd(M)S can be addressed by efficiently quenching the hole generated on Cd(M)S through a Z-scheme. Third, most of the materials required are relatively inexpensive and easily available with some of the noble metals replaceable by other non-noble metals without compromising the photocatalytic efficiency.

The invention provides a photo electrochemical (PEC) thin film comprising metal nanoparticles positioned between a Cd*ₓ*M_{1-*x*}S semiconductor material and a metal oxide semiconductor material, wherein: the metal oxide is TiO₂; x is from 0.7 to 0.9; and the film comprises TiO₂@Ag/Pd@CdₓZn₁₋ₓS; or the film comprises TiO₂@M1@CdₓNi₁₋ₓS, where M1 is Pt, Au, Pd, or Pd/Ag. In a further embodiment, the metal nanoparticles can be core-shell nanoparticles of two metals. In certain embodiments, the second semiconductor to metal nanoparticle ratio can be 50:1 to 1000:1, including all values and ranges there between *(e.g.,* 50:1, 100:1, 150:1, 200:1, 250:1, 300:1, 350:1, 400:1, 450:1, 500:1, 550:1, 600:1, 650:1, 700:1, 750:1, 800:1, 850:1, 900:1, 950:1, or 1000:1). In a further embodiment, the second semiconductor to S ratio can be 4:1, 3:1, 2:1, 1:1, to 1:2, including all values and ranges there between.

Other aspects are directed to a photocatalytic reactor. A photocatalytic reactor can include an inlet for feeding water or aqueous solution to a reactor chamber. The reaction chamber can include (i) a photo electrochemical (PEC) assembly comprising a PEC thin film according to the invention, (ii) a H₂ gas product outlet, (iii) an O₂ gas product outlet, and (iv) ion exchange membrane. In certain aspects, the reactor chamber can be transparent to visible light. In certain aspects, the Cd*ₓ*M_{1-*x*}S semiconductor can be deposited on a conductive support. The conductive support can be stainless steel, molybdenum, titanium, tungsten, or tantalum, or an alloy thereof. The conductive support can have a base coat that can include a hydrogen generation catalyst. The hydrogen generation catalyst can include Pt, Pd, Au, Ag, Ir, Ru, Rh, Mo, Ni, Co, Fe, W, or Sn as well as combinations thereof, or alloys thereof, such as a Mo/Ni hydrogen catalyst. The metal oxide semiconductor material may further comprise an oxygen-ion oxidation catalyst on the surface of the material. In certain aspects, the oxygen-ion oxidation catalyst (or oxygen co-catalyst) can be a metal oxide having the general formula of AO*_{y}* or A_{z}B_{1-*z*}O*_{y}*. where *z* is < 1, and *y* is a value to balance the valence of the metal. A and/or B can be Pt, Pd, Au, Ag, Ir, Ru, Rh, Mo, Ni, Co, Fe, W, or Sn as well as combinations or alloys thereof, such as IrNiO₃. In some embodiments, the oxygen-ion oxidation catalyst (or metal oxide) can include a promoter element or metal (*e.g*., phosphorus).

The invention also provides a method of producing hydrogen comprising irradiating the photo electrochemical (PEC) thin film according to the invention with light in the presence of water.

The following includes definitions of various terms and phrases used throughout this specification.

The phrase "Z-scheme photocatalytic water-splitting" refers to a two-step photoexcitation process using two different semiconductors and a reversible donor/acceptor pair or shuttle redox mediator. In photocatalytic Z-scheme water-splitting two semiconducting materials with different band gaps are used to (1) absorb larger fractions of the solar light spectrum and (2) to drive the proton reduction reaction (hydrogen evolution) and the oxygen anion oxidation reaction at different particles. In this approach, molecular hydrogen and oxygen can be produced separately resulting in overall lower hydrogen production costs.

"Nanostructure" or "nanomaterial" refer to an object or material in which at least one dimension of the object or material is equal to or less than 1000 nm (*e.g.,* one dimension is 1 to 1000 nm in size), preferably equal to or less than 100 nm. In a particular aspect, the nanostructure includes at least two dimensions that are equal to or less than 1000 nm (*e.g.,* a first dimension is 1 to 1000 nm in size and a second dimension is 1 to 1000 nm in size), preferably equal to or less than 100 nm. In another aspect, the nanostructure includes three dimensions that are equal to or less than 1000 nm (*e.g*., a first dimension is 1 to 1000 nm in size, a second dimension is 1 to 1000 nm in size, and a third dimension is 1 to 1000 nm in size), preferably equal to or less than 100 nm. The shape of the nanostructure can be of a wire, a particle (*e.g*., having a substantially spherical or spherical shape), a rod, a tetrapod, a hyper-branched structure, a tube, a cube, or mixtures thereof. "Nanoparticles" include particles having an average diameter size of 1 to 1000 nanometers, preferably 1 to 100 nm.

The term "semiconductive material", "semiconductor," or "semiconducting substrate" and the like is generally used to refer to elements, structures, or devices, *etc.* that include materials that have semiconductive properties, unless otherwise indicated.

The use of the words "a" or "an" when used in conjunction with any of the terms "comprising," "including," "containing," or "having" in the claims, or the specification, may mean "one," but it is also consistent with the meaning of "one or more," "at least one," and "one or more than one."

The terms "about" or "approximately" are defined as being close to as understood by one of ordinary skill in the art. In one embodiment, the terms are defined to be within 10%, preferably within 5%, more preferably within 1%, and most preferably within 0.5%.

The terms "wt.%," "vol.%," or "mol.%" refers to a weight percentage of a component, a volume percentage of a component, or molar percentage of a component, respectively, based on the total weight, the total volume of material, or total moles, that includes the component. In an example, 10 grams of component in 100 grams of the material is 10 wt.% of component.

The term "substantially" and its variations are defined to include ranges within 10%, within 5%, within 1%, or within 0.5%.

The terms "inhibiting" or "reducing" or "preventing" or "avoiding" or any variation of these terms, when used in the claims and/or the specification includes any measurable decrease or complete inhibition to achieve a desired result.

The term "effective," as that term is used in the specification and/or claims, means adequate to accomplish a desired, expected, or intended result.

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The catalysts of the present invention can "comprise," "consist essentially of," or "consist of' particular ingredients, components, compositions, *etc.* disclosed throughout the specification. With respect to the transitional phrase "consisting essentially of," in one aspect, a basic and novel characteristic of the catalysts of the present invention are their abilities to photocatalyze water-splitting.

Other objects, features and advantages of the present invention will become apparent from the following detailed description.

### DESCRIPTION OF THE DRAWINGS

The following drawings form part of the present specification and are included to further demonstrate certain aspects of the present invention. The invention may be better understood by reference to one or more of these drawings in combination with the detailed description of the specification embodiments presented herein.
**FIGS. 1A** and **1B** depict schematics of synthesis of two Z-Scheme catalysts of the present invention. FIG 1A depicts the schematic of the synthesis of TiO₂/M1/CdₓZn₁₋ₓS. FIG 1B depicts the schematic of the synthesis of TiO₂/M1/CdₓNi₁₋ₓS.
**FIG. 2** depicts a schematic of a total water-splitting system that includes (1) hydrogen production catalyst, (2) conductive support, (3) PEC thin film based Z-scheme catalyst of the present invention, and (4) oxygen production catalyst.
**FIGS. 3A and 3B** depict X-ray diffraction (XRD) patterns of two Z-Scheme photocatalysts of the present invention. FIG. 3A is an XRD pattern of TiO₂/Ag-Pt/Cd_{0.8}Zn_{0.2}S based systems. FIG. 3B is an XRD pattern of TiO₂/M1/Cd(Ni)S based systems.
**FIGS. 4A** and **4B** depict ultra-violet (UV) visible (vis) spectra of two Z-Scheme catalysts of the present invention. FIG. 4A depicts UV-vis absorption spectra of Cd_{0.8}Zn_{0.2}S based materials. FIG. 4B depicts UV-vis absorption spectra of TiO₂/M/Cd(Ni)S based systems.
**FIGS. 5A-5C** depict graphs of photocatalytic hydrogen generation of photocatalysts of the present invention. FIG. 5A depicts hydrogen production versus time for Cd_{0.8}Zn_{0.2}S based photo-catalysts. FIG. 5B depicts hydrogen production versus time for Cd(Ni)S based catalysts. FIG. 5C depicts comparison of the hydrogen production rate of various photo-catalysts of the present invention and comparative catalysts of Pd-Ag/ TiO₂ and 1 wt.% Au/TiO.

### DESCRIPTION

A solution to at least some of the problems associated with light harvesting associated with photocatalytic systems has been discovered. The solution is premised on an integrated photocatalyst that shows a redox potential scheme corresponding to the Z-scheme, the total potential difference of which is sufficient to permit cleavage of water into hydrogen and oxygen when the catalyst is irradiated with light (e.g., sun light) that includes a wavelength of at least 420 nm, 430 nm, 440 nm, 450 nm, and up to 700 nm. The integrated photocatalyst is a photo electrochemical (PEC) thin film. A water-splitting PEC thin film described herein includes metal nanoparticles positioned between a first semiconductor and a second semiconductor to form a Z-scheme for total water-splitting.

Semiconductor materials can include: elements from Column 4 of the Periodic Table; materials including elements from Column 3 and Column 5 of the Periodic Table; materials including elements from Columns 2 and 4 of the Periodic Table; materials including elements from Columns 1 and 7 of the Periodic table; materials including elements from Columns 4 and 6 of the Periodic Table; materials including elements from Columns 5 and 7 of the Periodic Table; and/or materials including elements from Columns 2 and 5 of the Periodic Table. Other materials with semiconductive properties can include layered semiconductors, metallic alloys, miscellaneous oxides, some organic materials, and some magnetic materials.

*First semiconductor* - In certain aspects, the first semiconductor may have a band gap that from 1.7 to 2.8 eV, or 2.0 to 2.5, or 2.1 to 2.3 eV, or any range or value there between. In certain aspects, a first semiconductor can be a Cd*ₓ*Zn_{1-*x*}S (2.4 eV) semiconductor, where *x* is from 0.7 to 0.9, or any value at least, equal to, or between any two of 0.70, 0.75, 0.8, 0.85 and 0.9. In some instances, a Cd*ₓ*Ni_{1-*x*}S (2.0 eV) semiconductor, where *x* is from 0.7 to 0.9, or any value at least, equal to, or between any two of 0.70, 0.75, 0.8, 0.85 and 0.9.

*Second semiconductor* - The second semiconductor is TiO₂.

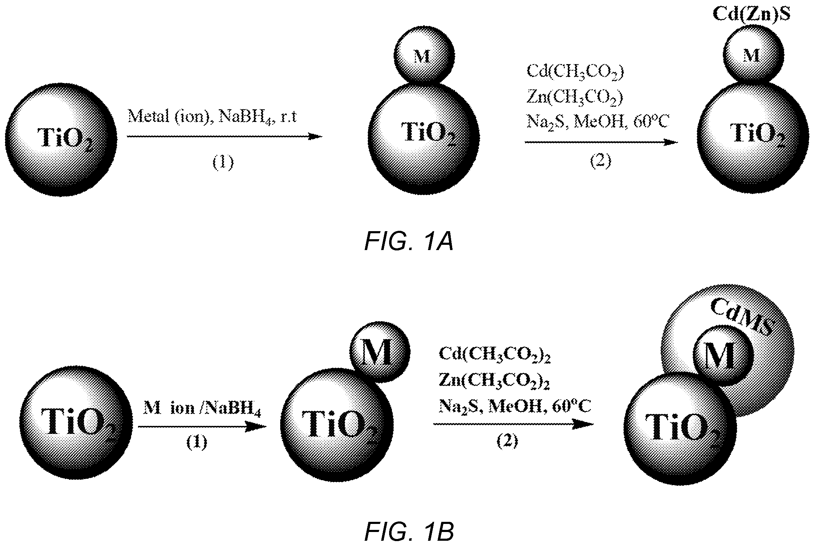

*Metal nanostructures* - Certain aspects of the invention are directed to the lowering the amount of platinum (Pt) used or replacement of platinum nanostructures with lower cost nanostructures and utilizing a plasmonic effect to enhance hydrogen generation rate and improve the stability of the catalyst. The amount of Pt loading in the Z-scheme catalysts can be from 0.05 wt.% to 1 wt.%, or 0.1 wt.% to 0.8 wt.%, or at least, equal to, or between any two of 0.05 wt.%, 0.1 wt.%, 0.15 wt.%, 0.2 wt.%, 0.3 wt.%, 0.4 wt.%, 0.5 wt.%, 0.6 wt.%, 0.7 wt.%, 0.8 wt.%, 0.9 wt.%, and 1 wt.%. The nanostructures are nanoparticles. The present invention provides the advantage of using less expensive metals (Pd) as well as bimetallic systems (Ag/Pd). The preparation of the Z-scheme catalyst can be done using known catalysts preparation methods. In a first step, the metal nanostructures can be deposited on the second semiconductor material to form a M1/second semiconductor material. By way of example, a metal precursor solution can be added to an alcoholic suspension of the first semiconductor particles. A reducing action can be added to the solution and the solution agitated until the metal precursor material forms a zero valent metal. The resulting particles can be isolated (e.g., centrifugation) and dried to give a M1@ second semiconductor material. The M1@ second semiconductor material can be dispersed in an alcoholic solution and heated to an appropriate temperature (*e.g.,* 55 to 65 °C). A metal precursor of the CdMS series (first semiconductor material) can be added to the heated alcoholic dispersion of the M1@ second semiconductor material. A cadmium metal precursor can be an alcoholic solution, and a reducing agent (*e.g.,* sodium sulfide) can be added to the metal precursor/M1@ second semiconductor dispersion. The solution can be agitated for a period of time and the resulting second semiconductor@M1@CdMS material can be isolated, washed with an aqueous methanol solution, and the then dried at 50 to 75 °C to yield the final second semiconductor/M1@CdₓM₁₋ₓS material. In some embodiments, the CdMS material is formed and then added to the M1/second semiconductor material. A schematic of the preparation of the TiO₂/M1/CdₓZn₁₋ₓS (M1= Au (reference), Ag (reference), Ni (reference), Cu (reference), Au/Ni (reference), Ag/Ni (reference), Au/Pd (reference), Ag/Pd, Au/Cu (reference), and Ag/Cu (reference)) and TiO₂/M1/CdₓNi₁₋ₓS are shown in FIGS. 1A and 1B, respectively. As shown in FIG. 1A, the semiconductor/M1 and CdMS material are layered. As shown in FIG. 1B, the CdMS forms a shell over M1 which is on the surface of the first semiconductor material.

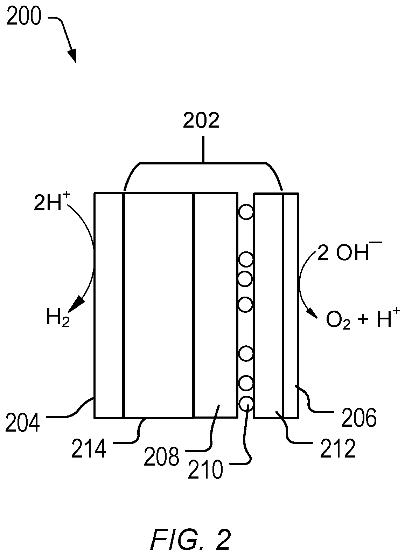

The metal nanoparticles (M1) can be positioned/placed between TiO2 (See, FIG. 2) and CdₓZn₁₋ₓS with the purpose of constructing an effective Z-scheme photocatalyst. The ratio between the second semiconductor and sulfur, second semiconductor and metal nanostructure (M1), *x* value in CdₓM₁₋ₓS, or combinations thereof can be optimized to maximize the hydrogen generation rate. The resulting material can be a film.

The Z-scheme photocatalysts of the present invention can be used in a water-splitting system that include a hydrogen co-catalyst and an oxygen co-catalyst. FIG. 2 depicts a schematic of a water-splitting catalyst system 200. System 200 can include water-splitting systems that include the Z-scheme photocatalyst of the present invention 202 in combination with a hydrogen co-catalyst 204 and an oxygen co-catalyst 206. The Z-scheme photocatalyst 202 can be a multi-layer film that is electrically and photo active (*e.g.,* a PEC film). Z-scheme photocatalyst can include first semiconductor material 208, metal nanostructure 210, and second semiconductor material 212. First semiconductor material 208 can have a thickness of 100 nm to 5000 nm, 500 nm to 3000 nm, or 1000 nm to 2000 nm or any value or range there between. Metal nanostructure 210 can have a size of 0.5 nm to 20 nm, 1 nm to 10 nm, 2 nm to 5 nm or about 3 nm or any value or range there between. Metal oxide layer 212 have a thickness of 10 to 500 nm, 50 to 400 nm, or 100 to 300 nm or about 200 nm. In some instances, first semiconductor material 202 can have a thickness of 2000 nm, the metal nanostructure can be 3 nm, and the second semiconductor can have a thickness of 20 nm. Z-scheme photocatalyst 202 can be deposited on conducting support material 214 (*e.g.,* a stainless steel support).

Hydrogen co-catalyst 204 can be deposited on a second portion of support material 214 opposite of Z-scheme photocatalyst 202. A thickness of hydrogen co-catalyst can be 0.01 to 50 nm, 1 to 30 nm or 5 to 15 nm, or any value or range there between, or about 10 nm. The hydrogen generation catalyst can have two metals at a ratio of 10:1, 9:1, 8:1, 7:1, 6:1, 5:1, 4:1, 3:1, 2:1, 1:1, 1:2, 1:3, 1:4, 1:5, 1:6, 1:7, 1:8, 1:9, to 1:10. Examples of hydrogen production co-catalysts can include Pt, Pd, Au, Ag, Ir, Ru, Rh, Mo, Ni, Ce, Cu, Co, Fe, W and Sn as well as combinations thereof (*e.g*., Mo:Ni catalyst in a 1:1 weight ratio). In certain aspect, the Mo/Ni hydrogen catalyst can have a Mo:Ni a ratio of 10:1 to 1:10, including all values and ranges there between.

Oxygen producing co-catalyst 206 can be deposited on a portion of the second semiconductor 212 (*e.g.,* metal oxide or carbon nitride material). A thickness of oxygen producing co-catalyst 206 can be 0.01 to 50 nm, 1 nm to 40 nm or 10 to 30 nm, or any range or value there between, or about 30 nm. Oxygen co-catalyst 206 can be a metal oxide (AO_{y}) or (A_{z}B_{1-z}O_{y}) where *z* < 1 and y is a value sufficient to balance the valence of the metal. The metal (A) can be Pt, Pd, Au, Ag, Ir, Ru, Rh, Mo, Ni, Cu, Co, Fe, W, Sn, and combinations thereof. An example of an oxygen co-catalyst 206 includes IrNiO₃. Parts of the catalysts can be deposited, for example, on TiO₂/M/CdₓZn₁₋ₓS by a "light deposition method." In some embodiments, the water-splitting component is a wireless total water-splitting system having a TiO₂/M/CdₓZn₁₋ₓS base.

An apparatus or system for the production of hydrogen from water or aqueous solutions of organic compounds by using the Z-Scheme photocatalyst of the present inventions or apparatus described herein can include one or more of (i) a light source (such as a visible light source), (ii) a reactor (optionally a transparent portion for light if the "light source" is external to the reactor), (iii) an inlet for feeding water or aqueous solution to the reactor, and (iv) a gas product outlet for releasing hydrogen liberated in the reaction chamber. The photocatalyst described herein can be located inside the reactor. The apparatus or system for the production of hydrogen can also include a storage chamber for collecting and storing the molecular hydrogen produced. The storage chamber can be in communication with the reaction chamber *via* the gas or product outlets. The storage chamber may be pressurized.

Valves may also be present, to control the flow of water or aqueous solution into the reactor via the inlet and release of gas via the outlet. Control means may also be present to adjust the light source intensity or even switch it on or off (*e.g.,* provide access or block sunlight) as required. The reaction chamber or reactor may further comprise a waste outlet for removal of waste or by-products or unreacted water or aqueous solution, the waste outlet optionally having a valve. Still further, the hydrogen production device may comprise control means operably linked to the valves for controlling the flow of water or aqueous solution into the reaction chamber, the flow of molecular hydrogen through the outlet (and into the storage chamber if present), and/or the flow of waste or by-products or unreacted water or aqueous solution through the waste outlet.

### EXAMPLES

The following examples as well as the figures are included to demonstrate preferred embodiments of the invention.

### Materials

Stock solutions were prepared according to Table 1.

**Table 1**

| **Chemicals** | **MW (g/mol)** | **Mass (g)** | **Mole (mmol/ml)** | **V (mL)** | **Molar conc.** | **Purity** |
|---|---|---|---|---|---|---|
| Zn(CH₃CO₂).2H₂O | 220 | 1.76 | 0.08 | 100 (MeOH) | 0.08M | 99% |
| Cd(CH₃CO₂).2H₂O | 266.5 | | 0.08 | 100 (MeOH) | 0.08M | 99% |
| Na₂S. xH₂O | 78 | 1.3 | 0.1 | 100 (MeOH) | 0.1M | 60% |
| NaBH₄ | 38 | 0.152 | 0.04 | 100 (MeOH) | 0.04M | 99% |
| PdCl₂ | 177.3 | 0.12 | 1.2 mg/mL | 100 (H₂O) | 0.0067 M | 99% |
| HAuCl₄ .3H₂O | 393.8 | 0.394 | 0.01 (1.9 mg Au / mL) | 100 (H₂O) | 0.01M | 99% |
| AgNO₃ | 169.8 | 0.79 | 1mg Ag/mL | 500 (H₂O) | 0.0093M | 99% |
| H₂PtCl₆.6H₂O | 409 | 0.961 | 1.9 mg Pt/mL | 200 (H₂O) | 0.012M | 99.9% |
| Ni(CH₃CO₂).2H₂O | 220 | 1.76 | 0.08 | 100 | 0.08M | 99% |
| Cd(CH₃CO₂).2H₂O | 266.5 | | 0.08 | 100 | 0.08M | 99% |
| Na₂S. xH₂O | 78 | 1.3 | 0.1 | 100 | 0.1M | 60% |
| NaBH₄ | 38 | 0.152 | 0.04 | 100 | 0.04M | 99% |
| HAuCl₄.3H₂O | 393.8 | 0.394 | 1.9 mg Au/mL | 100 | 0.01M | 99% |
| AgNO₃ | 169.8 | 0.79 | 1mg Ag/mL | 500 | 0.0093M | 99% |
| PdCl₂ | 177.3 | 0.12 | 1.2 Pd mg/mL | 100 | 0.0093 | 99% |
| H₂PtCl₆.6H₂O | 409 | 0.961 | 1.9 Pt/mL | 100 | 0.012M | 99% |

### Reference example 1

### (Synthesis of M1 on Second Semiconductor Material

**Synthesis of Ag/Pd@TiO₂.** AgNO₃ (1 mg (Ag) / mL, 10 mL) was added drop-wise to a suspension of PdCl₂ (1mg (Pd) / mL, 30 mL) and TiO₂ (10 g, Hombikat, American Elements, U.S.A.). The suspension was stirred at 80 °C until all the solvent was evaporated and the resulting powder was crushed and calcined at 350 °C for 5 hours to give core/shell structure of Ag (0.1 wt%) / Pd (0.3 wt.%) @ TiO₂ in quantitative yield.

**Synthesis of Au@TiO₂**. HAuCl₄ (1.97 mg (Au) / mL, 1.7 mL) was added drop-wise to a methanolic solution of TiO₂ (0.33 g, 4.1 mmol) nanocrystals, followed by NaBH₄ (40 mM, 5 mL) aqueous solution. The solution was stirred for 10 min. The solution color became black due to the formation of platinum on TiO₂ nanoparticles. The resulting solution was centrifuged, filtered and dried in air to give core/shell structure of Au (0.5 wt.%) @ TiO₂ in quantitative yield.

**Synthesis of Ag@TiO₂.** AgNO₃ (1mg (Au) / mL, 4 mL) was added drop-wise to a methanolic solution of TiO₂ (0.33 g, 4.1 mmol) nanocrystals, followed by NaBH₄ (40 mM, 5 mL) aqueous solution. The solution was stirred for 10 min. The solution color became black due to the formation of platinum on TiO₂ nanoparticles. The resulting solution was centrifuged, filtered and dried in air to give Ag (0.5 wt.%) @ TiO₂ in quantitative yield.

**Synthesis of Au/Pd@TiO_{2.}.** A mixture of HAuCl₄ (1.97 mg (Au) / mL, 0.76 mL) and PdCI₂ (1.2 mg (Pd) / mL, 1.3 mL) was added drop-wise to a methanolic solution of TiO₂ (0.33 g, 4.1 mmol) nanocrystals, followed by NaBH₄ (40 mM, 5 mL) aqueous solution. The solution was stirred for 10 min. The resulting solution was centrifuged, filtered and dried in air to give Au (0.5 wt%) / Pd (0.5 wt%) @ TiO₂ in quantitative yield.

**Synthesis of Pd/TiO₂**. PdCl₂ (1.2 mg (Pd) / mL, 0.83 mL) was added drop-wise to a methanolic suspension of TiO₂ (0.33 g, 4.1 mmol) nanocrystals, followed by 5 mL of NaBH₄ (40 mM) aqueous solution. The solution was stirred for 10 min. The solution color became black due to the formation of palladium on TiO₂ nanoparticles. The resulting solution was centrifuged, filtered and dried in air to give Pd (0.3 wt%) @ TiO₂ in quantitative yield.

**Synthesis of Au@TiO₂**. HAuCl₄ (1.97 mg (Au) / mL, 1.7 mL) was added drop-wise to a methanolic suspension of TiO₂ (0.33 g, 4.1 mmol) nanocrystals, followed by 5 mL of NaBH₄ (40 mM) aqueous solution. The solution was stirred for 10 min. The resulting solution was centrifuged, filtered and dried in air to give Au (∼1 wt%) @ TiO₂ in quantitative yield.

**Synthesis of Pt@TiO₂**. H₂PtCl₆ 6H₂O (1.9 mg (Pt) / mL, 1.8 mL) was added drop-wise to a methanolic suspension of TiO₂ (0.33 g, 4.1 mmol) nanocrystals, followed by 5 mL of NaBH₄ (40 mM) aqueous solution. The solution was stirred for 10 min. The solution color became black due to the formation of platinum on TiO₂ nanoparticles. The resulting solution was centrifuged, filtered and dried in air to give Pt (1 wt%) @ TiO₂ in quantitative yield.

### Reference example 2

### (Synthesis of Cd(Ni)S

Nickel acetate (0.1 mmol) from the stock solution (80 mM, 1.25 mL), the cadmium acetate (0.9 mmol) from the stock solution (80 mM, 11.25 mL) were mixed and stirred for 15 min at 60 °C then sodium sulfide (3 mmol) from (100 mM, 30 mL) methanolic stock solution was added dropwise. The resulting suspension was stirred for 1 hour. The precipitates were separated by centrifugation, washed with H₂O / MeOH (1:1) mixture and dried at 60 °C overnight to give the final product of Cd(Ni)S.

### Reference example 3

### (Synthesis of Pd@Cd(Ni)S)

PdCl₂ (1.2 mg (Pd) / mL, 0.6 mL) was added drop-wise to a suspension of Cd(Ni)S (200 mg) nanoparticles in 100 mL water solution of benzyl alcohol and acetic acid mixture (2.5-2.5 v/v%). The resulting mixture was illuminated under UV (λ=360 nm) light with a light intensity of 5 mW / cm² for 4 hours then filtered, washed with water and dried in air to give Pd (0.3 wt%) @ Cd(Ni)S.

### Example 4

### (Synthesis of TiO₂@M@Cd(Ni)S.

TiO₂/M (0.2 g, 2.5 mmol) nanoparticles of Example 1 were redispersed in 70 mL methanol and the temperature was raised to 60 °C. In order to form Cd_{0.9}Ni_{0.1}S layers, the required amount of nickel acetate (0.25 mmol) from nickel acetate stock solution (80 mM, 3.1 mL) was added to the dispersion and then cadmium acetate (2.25 mmol) from (80 mM, 28.1 mL) stock solution and sodium sulfide (3 mmol) from (100 mM, 30 mL) methanolic stock solutions were added drop wise while stirring. Stirring was continued for an additional 30 min. Products were separated by centrifugation and washed with H₂O / MeOH mixture and dried at 60 °C overnight to give the final products.

### Example 5

### (Synthesis of TiO₂@M@Cd_{0.8}Zn_{0.2}S Compounds)

TiO₂ / M (0.2 g, 2.5 mmol) nanoparticles of Example 1 were re-dispersed in 70 mL methanol and the temperature was raised to 60 °C. In order to form Cd_{0.8}Zn_{0.2}S layer of the particles, zinc acetate (0.5 mmol) from zinc acetate stock solution (80 mM, 6.25 mL) was added to the dispersion and then the cadmium acetate (2 mmol) from (80 mM, 25 mL) stock solution and sodium sulfide (3 mmol) from (100 mM, 30 mL) methanolic stock solutions were added drop wise simultaneously while stirring the solution. Stirring was continued for 30 min more. Products were separated by centrifugation and washed with H₂O / MeOH mixture and dried at 60 °C overnight to give the final product (0.4 g, 88% in yield).

### Example 6

### (Characterization)

The materials were characterized by UV-vis, and X-ray Diffraction (XRD) to study the band gap, composition, and crystallinity. XRD spectra were recorded using a Bruker D8 Advance X-ray diffractometer. Cu Kα (λ = 1.5406 Å) radiation over the range of 2θ interval between 20 and 90° with a step size of 0.010° and a step time of 0.2 s/step were used.

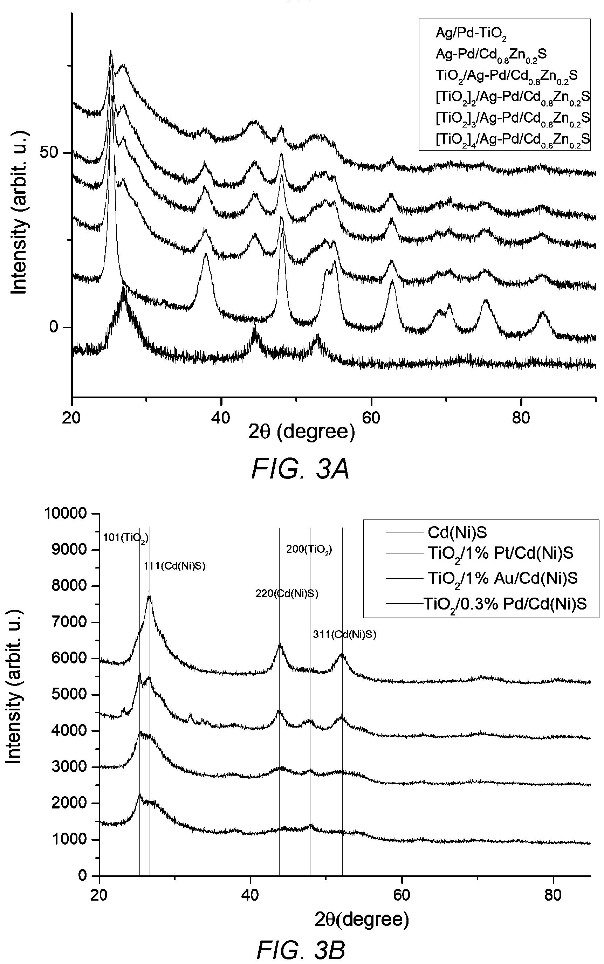

The XRD pattern of Ag-Pd/TiO₂, Ag-Pd/ Cd_{0.8}Zn_{0.2}S, and [TiO₂]ₐ /Ag-Pd/ Cd_{0.8}Zn_{0.2}S (a=1 to 4) compounds listed in Table 2 are depicted in FIG. 3A. The hybrid system shows a clear mixture of anatase TiO₂ and cubic Cd_{0.8}Zn_{0.2}S phases in FIG. 3A. The Cd:Zn ratios were confirmed by Vergard's law. The XRD pattern of Cd(Ni)S, TiO₂/M1/Cd(Ni)S compounds listed in Table 2 are depicted in FIG. 3B. The peaks located at 25.4° and 47.9° correspond to the (101) and (200) planes of the TiO₂ anatase phase (JCPDS 21-1272). The diffraction feature of Cd(Ni)S appearing at 26.7°, 43.2° and 52.1° correspond to the (111), (220), (311) planes of cubic Cd(Ni)S (JCPDS 42-1411). All the characteristic peaks in FIG. 3B are broadened due to the small particles size of each components indicating the polycrystalline nature of the samples.

**Table 2**

| **Compound No.** | **Compound** | **Pattern Position** | **FIG. No.** |
|---|---|---|---|
| 1 | Ag-Pd-TiO₂ | Bottom pattern | 4A |
| 2 | Ag-Pd/ Cd_{0.8}Zn_{0.2}S | Above pattern of No. 1 | 4A |
| 3 | [TiO₂]₄/Ag-Pd/Cd_{0.8}Zn_{0.2}S | Above pattern of No. 2 | 4A |
| 4 | [TiO₂]₃ /Ag-Pd/ Cd_{0.8}Zn_{0.2}S | Above pattern of No. 3 | 4A |
| 5 | [TiO₂]₂/Ag-Pd/Cd_{0.8}Zn_{0.2}S | Above pattern of No. 4 | 4A |
| 6 | TiO₂ /Ag-Pd/Cd_{0.8}Zn_{0.2}S | Above pattern of No. 4 | 4A |
| 7 | TiO₂/ 0.3 wt.% Pd/ Cd(Ni)S | Bottom pattern | 4B |
| 8 | TiO₂/ 0.1 wt.% Au/ Cd(Ni)S | Above pattern of No. 7 | 4B |
| 9 | TiO₂/ 0.1wt.% Pt/ Cd(Ni)S | Above pattern of No. 8 | 4B |
| 10 | Cd(Ni)s | Above pattern of No. 9 | 4B |

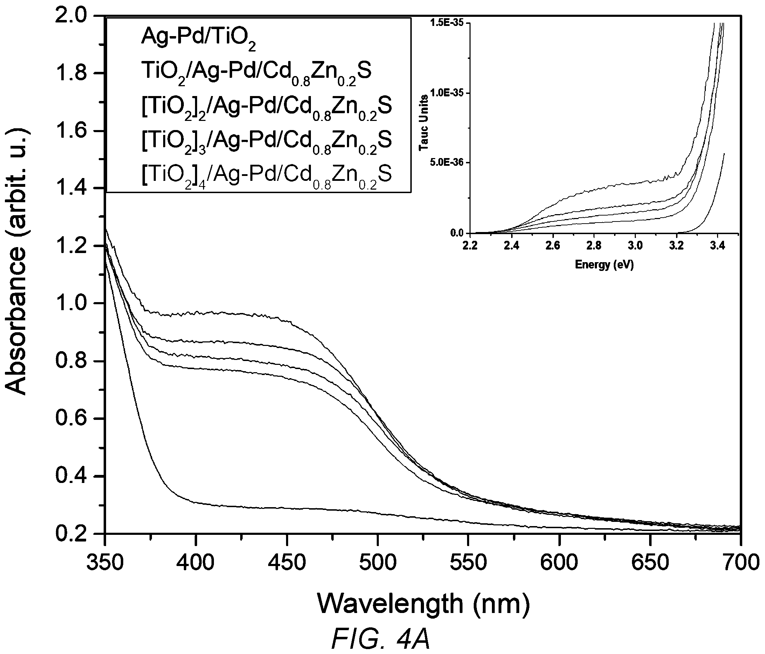

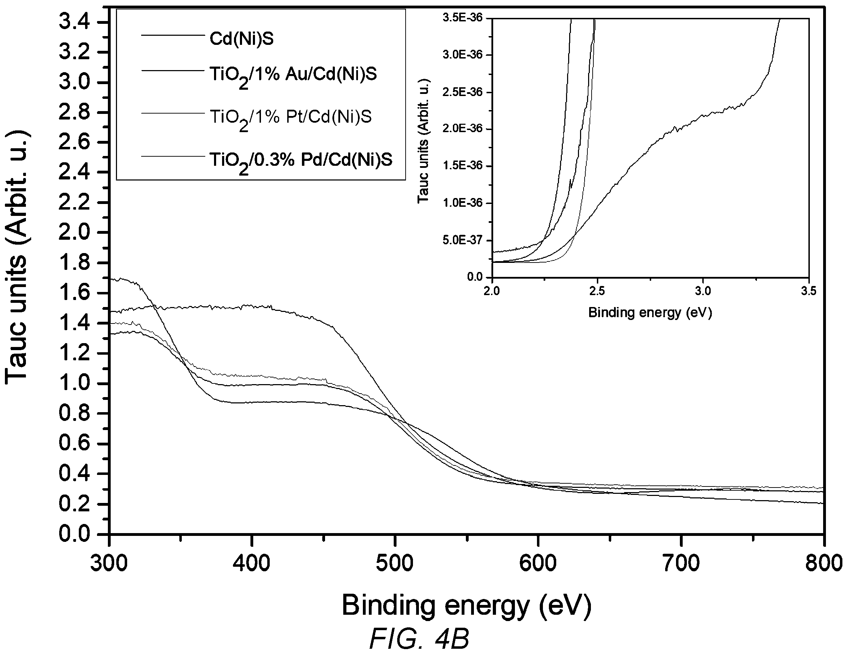

FIG. 4A presents UV-vis diffused reflectance spectra (from bottom to top) of the solid solutions of compounds 1 (bottom spectra), 3, 4, 5, and 6 (top spectra) of Table 2. The intense absorption bands with steep edges are observed which indicates that the light absorption is due to intrinsic band gap transitions. Kubelka-Munk function versus energy of incident light are shown in the inset of FIG. 4A, the band gap position is almost the same, around 2.4 eV. FIG. 4B shows UV-vis absorbance spectra and Tauc plots for the TiO₂ / M / Cd(Ni)S systems 7 (bottom spectra), 9, 8 and 10 (top spectra) of Table 2. All the TiO₂ containing samples show intense absorption below 400 nm because of the band-gap excitation of TiO₂. Furthermore, all samples have the distinct future of Cd(Ni)S which has absorption around 560 nm. The band gap determined from the Kubelka-Munk function versus energy of incident light are shown in the insert in FIG. 4B, the band gap of Cd(Ni)S (around 2.2 eV) is slightly lower compared to CdS (2.4 eV), which is due to the formation of Cd(Ni)S solid solution. The band gap of TiO₂ determined by Tauc plots was 3.2

### Example 7

### (Production of Hydrogen Using the Catalysts of the Present Invention)

**TiO₂/M1/CdₓZn₁₋ₓS System.** The rate of photocatalytic hydrogen generation of Z-scheme photocatalysts of the present invention was determined. The photocatalyst of the present invention (7 mg) or a comparative photocatalysts was dispersed in a water solution of benzyl alcohol and acetic acid mixture (2.5-2.5 v/v%) and irradiated with a light source at 23% light intensity (42.5 mW/cm²) of Xenon lamp and 1 cm² of the area of irradiation.

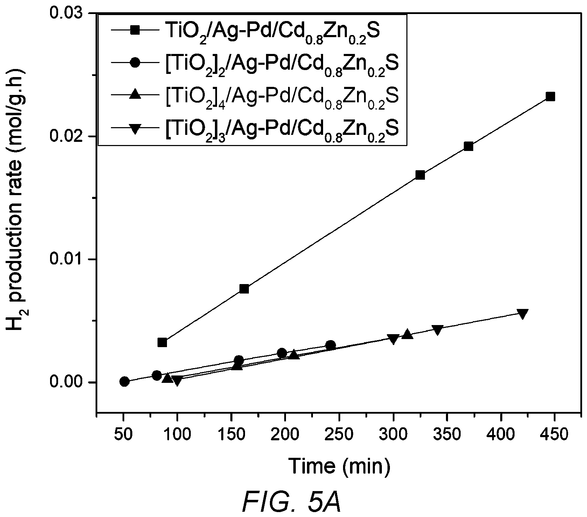

FIG. 5A depicts the hydrogen production versus time for the TiO₂/M1/CdₓZn₁₋ₓS series (compounds 3-6 of Table 2). The ratio of Cd:Zn (4:1) was kept the same during this study. Factors that influenced the hydrogen generation rate for of the were determined to be the (TiO₂)ₐ:S ratio and (TiO₂)ₐ:M1 ratio. The Z-Scheme catalyst of TiO₂/Ag (0.1 wt%) / Pd (0.3 wt%) Cd_{0.8}Zn_{0.2}S gave the best rate (FIG. 5A). In this system the molar ratio of metal oxide to M1 was 1:1.

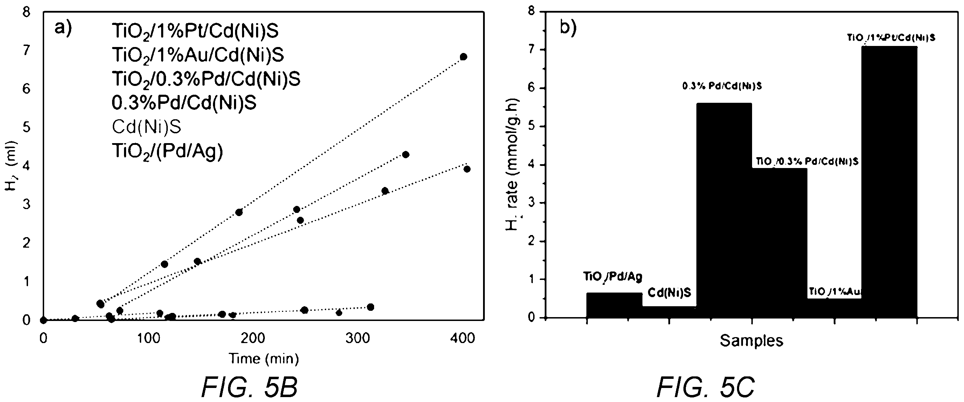

**TiO₂ / M1 / Cd(Ni)S System.** Hydrogen production of the TiO₂/M1/Cd(Ni)S system was determined using the same procedure as for the TiO₂/M1/CdZnS system. FIG. 5B depicts hydrogen production versus time for Cd(Ni)S based catalysts. FIG. 5C depicts comparison of the hydrogen production rate of the Cd(Ni)S based catalysts and comparative catalysts of Pd-Ag/ TiO₂ and 1 wt.% Au/TiO. Referring to FIG. 5B, the bottom data lines are TiO₂/Pd-Ag, Cd(Ni)S, and TiO₂/1%Au/Cd(Ni)S, the middle data lines are 0.3 wt.% Pd/Cd(Ni)S and TiO₂/1 wt.% Pd/Cd(Ni)S, and the top data line is TiO₂/1 wt.% Pt/ Cd(Ni)S. The TiO₂ / Pt/Cd(Ni)S catalysts far exceeding those of the single- and two-component systems due to an efficient electron-hole recombination rate between the TiO₂ conduction band and Cd(Ni)S valence band through Pt nanoparticles. Interestingly, the hydrogen generation rate of TiO₂ / 1%Au / Cd(Ni)S was very low. Moreover, 0.3%Pd / Cd(Ni)S gave a better rate than that of TiO₂ / 0.3%Pd / Cd(Ni)S. Thus, it was determined that changing the metal and its content in the TiO₂ / M / Cd(Ni)S catalyst series considerably affects the hydrogen generation rate under the same light intensity.

## Claims

1. A photo electrochemical (PEC) thin film comprising metal nanoparticles positioned between a Cd*ₓ*M_{1-*x*}S semiconductor material and a metal oxide semiconductor material, wherein:
the metal oxide is TiO₂;
x is from 0.7 to 0.9; and
the film comprises TiO₂@Ag/Pd@Cd*ₓ*Zn_{1-*x*}S; or
the film comprises TiO₂@M1@CdₓNi_{1-*x*}S, where M1 is Pt, Au, Pd, or Pd/Ag.

2. The PEC thin film of claim 1, wherein the film comprises TiO₂@Pt@Cd*ₓ*Ni_{1-*x*}S.

3. The PEC thin film of claim 1 or claim 2, wherein the metal nanoparticles are core-shell or alloy nanoparticles of two metals.

4. A photocatalytic reactor comprising a reactor having an inlet for feeding water or aqueous solution to a reactor chamber, the reaction chamber comprising:
(i) a photo electrochemical (PEC) assembly comprising a PEC thin film of any one of claims 1 to 3;
(ii) a H₂ gas product outlet;
(iii) O₂ gas product outlet; and
(iv) ion exchange membrane.

5. The reactor of claim 4, wherein the reactor chamber is transparent to visible light.

6. The reactor of claim 4 or claim 5, wherein the CdₓM₁₋ₓS semiconductor material is deposited on a conductive support.

7. The reactor of claim 6, wherein the conductive support has a base coat comprising a hydrogen generation catalyst.

8. The reactor of claim 6 or claim 7, wherein the conductive support is stainless steel, molybdenum, titanium, tungsten, tantalum, or an alloy thereof.

9. The reactor of any one of claims 4 to 8, wherein the metal oxide semiconductor material further comprises an oxygen co-catalyst on the surface of the material.

10. The reactor of claim 9, wherein the oxygen co-catalyst thin film is a metal oxide having the general formula of AO*_{y}* or B_{z}N_{1-z}O*_{y}*, where A and B are metals, and *z* is < 1 and *y* is a value that balances the valence of the oxide,

11. The reactor of claim 10, wherein A or B is one or more of Pt, Pd, Au, Ag, Ir, Ru, Rh, Mo, Ni, Ce, Cu, Co, Fe, W and Sn; and combinations thereof.

12. The reactor of claim 10 or claim 11, wherein the oxygen co-catalyst comprises a promoter element or metal.

13. A method of producing hydrogen comprising irradiating the photo electrochemical (PEC) thin film of any one of claims 1 to 3 with light in the presence of water.

## Patentansprüche

1. Photoelektrochemischer (PEC) Dünnfilm umfassend Metallnanopartikel, die zwischen einem CdₓM₁₋ₓS-Halbleitermaterial und einem Metalloxidhalbleitermaterial positioniert sind, wobei:
das Metalloxid TiO₂ ist;
x von 0,7 bis 0,9 ist; und
der Film TiO₂@Ag/Pd@CdₓZn₁₋ₓS umfasst; oder
der Film TiO₂@M1@CdₓNi₁₋ₓS umfasst, wobei M1 Pt, Au, Pd oder Pd/Ag ist.

2. PEC-Dünnfilm nach Anspruch 1, wobei der Film TiO₂@Pt@CdₓNi₁₋ₓS umfasst.

3. PEC-Dünnfilm nach Anspruch 1 oder Anspruch 2, wobei die Metallnanopartikel Kern-Schale- oder Legierungsnanopartikel von zwei Metallen sind.

4. Photokatalytischer Reaktor umfassend einen Reaktor mit einem Einlass zum Zuführen von Wasser oder wässriger Lösung zu einer Reaktorkammer, die Reaktionskammer umfassend:
(i) eine photoelektrochemische (PEC) Anordnung umfassend einen PEC-Dünnfilm nach einem der Ansprüche 1 bis 3;
(ii) eine H₂-Gasproduktauslass;
(iii) O₂-Gasproduktauslass; und
(iv) Ionenaustauschermembran.

5. Reaktor nach Anspruch 4, wobei die Reaktorkammer für sichtbares Licht transparent ist.

6. Reaktor nach Anspruch 4 oder 5, wobei das CdₓM₁₋ₓS -Halbleitermaterial auf einem leitenden Träger abgelagert wird.

7. Reaktor nach Anspruch 6, wobei der leitende Träger eine Grundschicht aufweist, umfassend einen Katalysator zur Wasserstofferzeugung.

8. Reaktor nach Anspruch 6 oder Anspruch 7, wobei der leitende Träger rostfreier Stahl, Molybdän, Titan, Wolfram, Tantal oder eine Legierung davon ist.

9. Reaktor nach einem der Ansprüche 4 bis 8, wobei das MetalloxidHalbleitermaterial ferner einen Sauerstoff-Cokatalysator auf der Oberfläche des Materials umfasst.

10. Reaktor nach Anspruch 9, wobei der Sauerstoff-Cokatalysator-Dünnfilm ein Metalloxid mit der allgemeinen Formel AO*_{y}* oder B*_{z}*N_{1-z}O*_{y}* ist, wobei A und B Metalle sind und *z* < 1 ist und *y* ein Wert ist, der die Wertigkeit des Oxids ausgleicht,

11. Reaktor nach Anspruch 10, wobei A oder B eines oder mehrere von Pt, Pd, Au, Ag, Ir, Ru, Rh, Mo, Ni, Ce, Cu, Co, Fe, W und Sn ist; und Kombinationen davon.

12. Reaktor nach Anspruch 10 oder Anspruch 11, wobei der Sauerstoff-Cokatalysator ein Promotorelement oder Metall umfasst.

13. Verfahren zur Erzeugung von Wasserstoff umfassend Bestrahlen des photoelektrochemischen (PEC) Dünnfilms nach einem der Ansprüche 1 bis 3 mit Licht in Gegenwart von Wasser.

## Revendications

1. Film mince photoélectrochimique (PEC) comprenant des nanoparticules métalliques positionnées entre un matériau semi-conducteur CdₓM₁₋ₓS et un matériau semi-conducteur oxyde métallique, dans lequel :
l'oxyde métallique est TiO₂;
x est de 0,7 à 0,9 ; et
le film comprend TiO₂@Ag/Pd@CdₓZn₁₋ₓS ; ou
le film comprend TiO₂@M1@CdₓNi₁₋ₓS, où M1 est Pt, Au, Pd, ou Pd/Ag.

2. Film mince PEC selon la revendication 1, dans lequel le film comprend TiO₂@Pt@CdₓNi₁₋ₓS.

3. Film mince PEC selon les revendications 1 ou 2, dans lequel les nanoparticules métalliques sont des nanoparticules à noyau-enveloppe ou en alliage de deux métaux.

4. Réacteur photocatalytique comprenant un réacteur ayant une entrée pour alimenter en eau ou en solution aqueuse une chambre de réacteur, la chambre de réaction comprenant :
(i) un assemblage photoélectrochimique (PEC) comprenant un film mince PEC selon l'une quelconque des revendications 1 à 3 ;
(ii) une sortie de produit gazeux H₂ ;
(iii) une sortie du produit gazeux O₂; et
(iv) une membrane échangeuse d'ions.

5. Réacteur selon la revendication 4, dans lequel la chambre de réacteur est transparente à la lumière visible.

6. Réacteur selon les revendications 4 ou 5, dans lequel le matériau semi-conducteur CdₓM₁₋ₓS est déposé sur un support conducteur.

7. Réacteur selon la revendication 6, dans lequel le support conducteur a une couche de base comprenant un catalyseur de génération d'hydrogène.

8. Réacteur selon les revendications 6 ou 7, dans lequel le support conducteur est de l'acier inoxydable, du molybdène, du titane, du tungstène, du tantale ou un de leurs alliages.

9. Réacteur selon l'une quelconque des revendications 4 à 8, dans lequel le matériau semi-conducteur à oxyde métallique comprend en outre un cocatalyseur d'oxygène sur la surface du matériau.

10. Réacteur selon la revendication 9, dans lequel le film mince de cocatalyseur d'oxygène est un oxyde métallique ayant la formule générale de AO_{y} ou B_{z}N_{1-z}O_{y}, où A et B sont des métaux, et *z* est <1 et *y* est une valeur qui équilibre la valence de l'oxyde,

11. Réacteur selon la revendication 10, dans lequel A ou B est un ou plusieurs parmi Pt, Pd, Au, Ag, Ir, Ru, Rh, Mo, Ni, Ce, Cu, Co, Fe, W et Sn; et leurs combinaisons.

12. Réacteur selon les revendications 10 ou 11, dans lequel le cocatalyseur d'oxygène comprend un élément promoteur ou un métal.

13. Procédé de production d'hydrogène comprenant l'irradiation du film mince photoélectrochimique (PEC) de l'une quelconque des revendications 1 à 3 avec de la lumière en présence d'eau.
